# EUROPÄISCHE PATENTSCHRIFT

(11) **EP 4 197 736 B1**
(45) Veröffentlichungstag und Bekanntmachung des Hinweises auf die Patenterteilung: **02.04.2025**
(21) Anmeldenummer: 22213035.3
(22) Anmeldetag: 13.12.2022
(51) Int. Cl.: B29C 44/34, B29C 33/02, B29C 33/04, B29C 44/58, B29C 45/73

(54) **FORMWERKZEUG ZUR HERSTELLUNG EINES PARTIKELSCHAUMFORMTEILS**
MOULDING TOOL FOR PRODUCING A PARTICLE FOAM MOULDING
MOULE POUR LA FABRICATION D'UNE PIÈCE MOULÉE EN MOUSSE PARTICULAIRE

(30) Priorität: 14.12.2021 DE 102021132978
(43) Veröffentlichungstag der Anmeldung: 21.06.2023
(73) Patentinhaber: PARAT Technology Group GmbH, 94089 Neureichenau (DE)
(72) Erfinder: Kremsreiter, Martin, 94089 Neureichenau (DE)
(74) Vertreter: Hafner & Kohl PartmbB

(56) Entgegenhaltungen:
- EP-A2- 0 909 626
- EP-A2- 0 976 517
- US-A- 3 837 769
- US-A- 4 627 946
- US-A1- 2004 222 566

## Beschreibung

Die Erfindung betrifft ein Formwerkzeug zur Herstellung eines Partikelschaumformteils, umfassend wenigstens zwei eine Formwerkzeugkavität des Formwerkzeugs definierende Formwerkzeughälften.

Entsprechende Formwerkzeuge sind aus dem technischen Gebiet der Verarbeitung von expandierbaren bzw. expansionsfähigen Partikelschaummaterialien zur Herstellung von Partikelschaumformteilen dem Grunde nach bekannt und umfassen typischerweise wenigstens zwei Formwerkzeughälften, welche gemeinsam eine Formwerkzeugkavität, d. h. im Allgemeinen eine die geometrische-konstruktive Gestaltung eines jeweilig herzustellenden Partikelschaumformteils abbildendes Volumen, begrenzen bzw. definieren.

Um im Rahmen des Betriebs jeweiliger Formwerkzeuge eine gewünschte Verbindung des typischerweise vermittels einer Befülleinrichtung partikelförmig in eine jeweilige Formwerkzeugkavität eingefüllten Partikelschaummaterials zu gewährleisten, ist eine Temperierung der Formwerkzeughälften erforderlich.

Dies gilt insbesondere für so genannte dampflose bzw. trockene Herstellungsprozesse, in welchen der zur Verbindung des Partikelschaummaterials erforderliche thermische Energieeintrag nicht durch Einströmen von Dampf bzw. Heißdampf in die jeweilige Formwerkzeugkavität, sondern allein durch die die jeweilige Formwerkzeugkavität begrenzenden Wandungen jeweiliger Formwerkzeughälften erfolgt. Besonders herausfordernd ist dabei die Herstellung großformatiger bzw. -volumiger Partikelschaumformteile, als hierfür in möglichst kurzer Zeit über die Wandungen jeweiliger Formwerkzeughälften eine vergleichsweise große Menge an thermischer Energie auf das Partikelschaummaterial zu übertragen ist.

Die hierzu bekannten Prinzipien zur Temperierung jeweiliger Formwerkzeuge bzw. Formwerkzeugkavitäten sind insbesondere im Hinblick auf deren konstruktiven Aufbau sowie die Effizienz der Temperierung verbesserungswürdig. US2004222566 A1 offenbart eines zweiteiligen Formwerkzeugs mit einer durch einer Zinnenstruktur gebildeten Isolationsschicht ausgebildet Oberflächenschicht.

Hiervon ausgehend liegt der Erfindung die Aufgabe zugrunde, ein verbessertes Formwerkzeug zur Herstellung eines Partikelschaumformteils anzugeben.

Die Aufgabe wird durch ein Formwerkzeug mit den Merkmalen des unabhängigen Anspruchs 1 gelöst. Die hierzu abhängigen Ansprüche betreffen mögliche Ausführungsformen des Formwerkzeugs.

Ein erster Aspekt der Erfindung betrifft ein Formwerkzeug zur Herstellung eines Partikelschaumformteils. Das Formwerkzeug ist sonach im Allgemeinen zur Verarbeitung von expandierbarem oder expandiertem Partikelschaummaterial (nachfolgend kurz als "Partikelschaummaterial" bezeichnet) zur Herstellung eines Partikelschaumformteils, eingerichtet. Bei dem Formwerkzeug handelt es sich sonach nicht um ein Spritzgießwerkzeug, in welches eine plastifizierte Kunststoffschmelze einspritzbar ist.

Das vermittels des Formwerkzeugs verarbeitbare Partikelschaummaterial liegt vor seiner Verarbeitung mit dem Formwerkzeug typischerweise partikelförmig vor. Bei dem Partikelschaummaterial bzw. entsprechenden Partikelschaummaterialpartikeln kann es sich um ein noch nicht expandiertes Partikelschaummaterial bzw. noch nicht expandierte Partikelschaummaterialpartikel, um ein vorexpandiertes Partikelschaummaterial bzw. vorexpandierte Partikelschaummaterialpartikel oder um ein vollständig expandiertes Partikelschaummaterial bzw. um vollständig expandierte Partikelschaummaterialpartikel handeln. Für ein noch nicht expandiertes Partikelschaummaterial wie auch für ein vorexpandiertes Partikelschaummaterial gilt, dass dieses typischerweise expandierbar ist, d. h. in einem Expansionsvorgang (weiter) expandiert werden können. Für ein vollständig expandiertes Partikelschaummaterial gilt, dass dieses typischerweise nicht mehr (weiter) expandiert werden kann. In allen Fällen können auch Partikelschaummaterialien, welche mit einer, z. B. thermisch, aktivierbaren Funktionsschicht beschichtete und/oder imprägnierte Partikelschaummaterialpartikel umfassen, verwendet werden. Konkrete Beispiele für vermittels des Formwerkzeugs verarbeitbare Partikelschaummaterialien sind in nicht abschließender Aufzählung expandierbare bzw. expandierte Polyolefine, wie z. B. expandierbares bzw. expandiertes Polyethylen oder expandierbares bzw. expandiertes Polypropylen, expandierbare bzw. expandierte Polystyrole oder expandierbare bzw. expandierte Acrylnitril-Butadien-Styrol-Copolymere.

Das Formwerkzeug kann zur rein konduktiven bzw. konvektiven, bevorzugt dampffreien bzw. dampflosen, Verarbeitung eines Partikelschaummaterial, d. h. insbesondere eines vollständig expandierten Partikelschaummaterials, eingerichtet sein.

Das Formwerkzeug kann insbesondere zur Herstellung großformatiger bzw. -volumiger Partikelschaumformteile eingerichtet sein. Bei entsprechenden großformatigen bzw. -volumigen Partikelschaumformteilen handelt es sich insbesondere um Partikelschaumformteile mit einer räumlichen Ausdehnung in wenigstens einer Raumrichtung von mehreren Zentimetern bzw. mehreren Dezimetern. Ein vermittels des Formwerkzeugs herstellbares Partikelschaumformteil kann sonach z. B. eine Höhe und/oder Breite und/oder Tiefe von mehreren Zentimetern bzw. mehreren Dezimetern aufweisen.

Zudem kann das Formwerkzeug insbesondere zur Herstellung dickwandiger Partikelschaumformteile eingerichtet sein. Bei entsprechenden dickwandigen Partikelschaumformteilen handelt es sich insbesondere um Partikelschaumformteile mit Wandstärken von mehreren Zentimetern bzw. mehreren Dezimetern. Ein vermittels des Formwerkzeugs herstellbares Partikelschaumformteil kann sonach z. B. eine Wandstärke von mehreren Zentimetern bzw. mehreren Dezimetern aufweisen.

Unabhängig seiner konkreten Abmessungen kann es sich bei einem vermittels des Formwerkzeugs herstellbaren Partikelschaumformteil im Allgemeinen um ein technisches Bauteil oder um eine technische Bauteilgruppe handeln. Konkret kann es sich bei einem entsprechenden Partikelschaumformteil insbesondere um ein Abdeckungs- oder Verkleidungsteil handeln. Ein entsprechendes Partikelschaumformteil kann insbesondere als Bauteil für ein Fahrzeug, d. h. insbesondere ein Bauteil für ein Kraftfahrzeug, Luftfahrzeug, etc., oder für eine sonstige Maschine, z. B. aus dem Bereich der Medizintechnik, vorgesehen sein.

Das Formwerkzeug umfasst wenigstens zwei Formwerkzeughälften. Die wenigstens zwei Formwerkzeughälften begrenzen bzw. definieren gemeinsam die formgebende Formwerkzeugkavität des Formwerkzeugs. Die wenigstens zwei Formwerkzeughälften weisen sonach jeweils eine oder mehrere formgebende Wandungen auf, welche jeweils eine die formgebende Formwerkzeugkavität des Formwerkzeugs begrenzenden bzw. definierende Kontur bilden. Die konkrete Formgebung jeweiliger formwerkzeughälftenseitiger formgebender Wandungen und damit der formgebenden Formwerkzeugkavität des Formwerkzeugs ist typischerweise im Hinblick auf die geometrisch-konstruktive Gestaltung des vermittels des Formwerkzeugs konkret herzustellenden Partikelschaumformteils gewählt.

Wenigstens eine Formwerkzeughälfte kann relativ zu wenigstens einer anderen Formwerkzeughälfte bewegbar gelagert sein. Derart kann eine Offenstellung des Formwerkzeugs realisiert werden, in welcher, z. B. zum Zwecke der Entnahme eines hergestellten Partikelschaumformteils, eine Zugangsmöglichkeit in die Formwerkzeugkavität gegeben ist, und eine Schließstellung des Formwerkzeugs realisiert werden, in welcher keine Zugangsmöglichkeit in die Formwerkzeugkavität gegeben ist. Zur Überführung der wenigstens einen Formwerkzeughälfte in eine jeweilige Offen- und Schließstellung kann dem Formwerkzeug wenigstens eine, z. B. (elektro)motorisch implementierte, Antriebseinrichtung zugeordnet sein.

Wenigstens eine Formwerkzeughälfte umfasst wenigstens Formwerkzeughälftenteile, welche miteinander unter Ausbildung der jeweiligen Formwerkzeughälfte verbindbar oder verbunden sind. Wenigstens eine Formwerkzeughälfte ist sonach mehrteilig ausgebildet. Wenigstens ein Formwerkzeughälftenteil der wenigstens zwei Formwerkzeughälftenteile einer entsprechend mehrteilig ausgebildeten Formwerkzeughälfte weist die erwähnte formgebende Wandung der jeweiligen Formwerkzeughälfte auf.

Die wenigstens zwei Formwerkzeughälftenteile sind miteinander unter Ausbildung eines von einem der Temperierung der wenigstens einen Formwerkzeughälfte dienenden Temperierfluid, wie z. B. einem Temperiergas und/oder einer Temperierflüssigkeit, durchströmbaren Zwischenraums verbindbar oder verbunden. Die wenigstens eine mehrteilig ausgebildete Formwerkzeughälfte umfasst sonach wenigstens zwei unter Ausbildung eines von einem der Temperierung der wenigstens einen Formwerkzeughälfte dienenden Temperierfluid durchströmbaren Zwischenraums miteinander verbindbare oder verbundene Formwerkzeughälftenteile. Eine mehrteilig ausgebildete Formwerkzeughälfte ist sonach durch den sich - jedenfalls im bestimmungsgemäß verbundenen Zustand der jeweiligen Formwerkzeughälftenteile - zwischen den wenigstens zwei Formwerkzeughälftenteilen erstreckenden Zwischenraum und der Möglichkeit, diesen sonach auch als Strömungsraum zu bezeichnenden Zwischenraum mit einem der Temperierung der wenigstens einen Formwerkzeughälfte dienenden Temperierfluid zu durchströmen, mit einer integrierten Temperiereinrichtung ausgebildet. Da sich der Zwischenraum typischerweise nahezu vollständig in wenigstens einer Raumrichtung, d. h. z. B. einer Breiten- und/oder Längenrichtung, der jeweiligen Formwerkzeughälfte erstreckt, weist die Temperiereinrichtung eine große Wärmeübertragungsfläche auf und ermöglicht eine großflächige Temperierung von im Betrieb des Formwerkzeugs in der Formwerkzeugkavität befindlichem Partikelschaummaterial.

Durch die mehrteilige Ausbildung einer Formwerkzeughälfte mit einem sich - jedenfalls im bestimmungsgemäß verbundenen Zustand der jeweiligen Formwerkzeughälftenteile - zwischen den wenigstens zwei Formwerkzeughälftenteilen erstreckenden Zwischenraum und der Möglichkeit, diesen mit einem der Temperierung der wenigstens einen Formwerkzeughälfte dienenden Temperierfluid zu durchströmen, ist sonach eine konstruktiv vergleichsweise einfach, jedoch im Hinblick auf ihre Temperierbarkeit hocheffizient konfigurierte Formwerkzeughälfte realisiert.

Durch die mehrteilige Ausbildung einer Formwerkzeughälfte können zudem funktionelle bzw. konstruktive Freiheitsgrade geschaffen werden, als nur ein Formwerkzeughälftenteil mit einer entsprechenden formgebenden Wandung ausgebildet sein muss, das andere Formwerkzeughälftenteil kann im Hinblick auf andere Anforderungen, wie z. B. gewünschte Strömungseigenschaften eines den Zwischenraum durchströmenden Temperierfluids, ausgebildet sein bzw. werden.

Insofern können sich die wenigstens zwei Formwerkzeughälftenteile neben ihrer Formgebung zumindest abschnittsweise auch in anderen geometrisch-konstruktiven Parametern, wie z. B. Wandstärke, unterscheiden. Denkbar ist es ebenso, dass sich die wenigstens zwei Formwerkzeughälftenteile zumindest abschnittsweise aus, sich z. B. im Hinblick auf ihre thermischen Eigenschaften, gleichen oder unterschiedlichen Materialien bzw. Materialstrukturen gebildet sein können. Beispielsweise kann ein Formwerkzeughälftenteil, welches die formgebende Wandung aufweist, aus einem Material bzw. einer Materialstruktur, wie z. B. einem Metall, insbesondere einem Leichtmetall, mit einer im Vergleich höheren Wärmeübertragungskapazität gebildet sein, um eine möglichst effiziente Wärmeübertragung auf das Partikelschaummaterial zu realisieren. An dieser Stelle sei allgemein ergänzt, dass die wenigstens zwei Formwerkzeughälften bzw. jeweilige Formwerkzeughälftenteile z. B. aus Metall, Kunststoff, Keramik oder Verbundmaterialien gebildet sein können. Ebenso sei ergänzt, dass die Formwerkzeughälften z. B. durch spanabhebende Verfahren oder Gussverfahren hergestellt sein können.

Die vorstehenden Ausführungen im Zusammenhang mit einer Formwerkzeughälfte können auch für mehrere oder alle Formwerkzeughälften des Formwerkzeugs gelten; mithin können mehrere oder alle Formwerkzeughälften des Formwerkzeugs entsprechend mehrteilig ausgebildet sein.

Insgesamt liegt ein verbessertes Formwerkzeug zur Herstellung eines Partikelschaumformteils vor.

Gemäß der Erfindung ist wenigstens eine Formwerkzeughälfte mit wenigstens einem Einströmabschnitt für ein in den Zwischenraum einströmendes Temperierfluid und wenigstens einem mit diesem kommunizierenden, durch Wandungsabschnitte der jeweiligen Formwerkzeughälfte begrenzten Vorverteilerraum ausgebildet. Ein entsprechender Vorverteilerraum kann insbesondere in einem Formwerkzeughälftenteil der jeweiligen Formwerkzeughälfte ausgebildet sein und somit durch Wandungsabschnitte des jeweiligen Formwerkzeughälftenteils begrenzt sein. Gegebenenfalls kann ein entsprechender Vorverteilerraum auch gemeinsam durch wenigstens zwei Formwerkzeughälftenteile der jeweiligen Formwerkzeughälfte ausgebildet und somit durch Wandungsabschnitte der wenigstens zwei Formwerkzeughälftenteile begrenzt sein. Mithin kann ein jeweiliges Formwerkzeughälftenteil durch einen entsprechenden Vorverteilerraum konstruktiv so konfiguriert sein, dass ein in dieses einströmendes Temperierfluid jedenfalls nicht vollständig unmittelbar in den Zwischenraum, sondern zunächst in den Vorverteilerraum strömt, in welchem dieses sich räumlich verteilen und erst nach entsprechender Verteilung, insbesondere flächenmäßig, möglichst gleichmäßig verteilt in den Zwischenraum einströmen kann. Derart kann vermieden werden, dass das Temperierfluid nur an einer bestimmten Stelle in den Zwischenraum einströmt, was gegebenenfalls dazu führen kann, dass sich das Temperierfluid ungleichmäßig in dem Zwischenraum verteilt, was wiederum zu einer ungleichmäßigen Temperaturverteilung innerhalb der jeweiligen Formwerkzeughälfte und damit einer ungleichmäßigen Temperierung über die jeweilige Formwerkzeughälfte führt. Innerhalb des Vorverteilerraums sind mehrere räumlich verteilt angeordnete oder ausgebildete Einströmabschnitte vorhanden, sodass auch ein möglichst gleichmäßiges Einströmen von Temperierfluid in den Vorverteilerraum gewährleistet werden kann.

Ein jeweiliger Einströmabschnitt kann in allen Fällen eine, z. B. flanschartige bzw. -förmige, Anschlussmöglichkeit zum Anschließen eines mit einer Temperierfluidversorgung verbundenen Leitungselements, wie z. B. eines Schlauchs, Rohrs, etc., aufweisen. Mithin können einem mehrere Einströmabschnitte aufweisenden Vorverteilerraum gegebenenfalls mehrere Temperierfluidversorgungen zugeordnet sein, über welche sich, z. B. über eine, z. B. als Fluidverteilerblock ausgebildete, Fluidverteilereinrichtung, abhängig oder unabhängig voneinander ein Temperierfluid in den Vorverteilerraum einströmen lässt. Eine entsprechende Anschlussmöglichkeit kann z. B. mit einem Gewinde versehen sein, auf welches sich ein entsprechendes Gegengewinde eines Leitungselements aufschrauben lässt.

Gemäß der Erfindung ist die einen jeweiligen Vorverteilerraum begrenzenden Wandungsabschnitte eines jeweiligen Formwerkzeughälftenteils - hierunter sind insbesondere die den Vorverteilerraum gegenüber dem Zwischenraum abgrenzenden Wandungsabschnitte eines jeweiligen Formwerkzeughälftenteils zu verstehen - zumindest abschnittsweise zinnenartig bzw. -förmig angeordnet oder ausgebildet.

Durch eine entsprechende Zinnenstruktur, welche sich im Allgemeinen durch unterschiedlich dimensionierte, d. h. insbesondere unterschiedlich hohe, Wandungsabschnitte in gleichmäßig oder ungleichmäßig abwechselnder Anordnung auszeichnet, kann ein, z. B. im Hinblick auf bestimmte Strömungseigenschaften des Temperierfluids, wie z. B. eine bestimmte Strömungsgeschwindigkeitsverteilung, gewünschtes Einströmen des Temperierfluids aus dem Vorverteilerraum in den Zwischenraum ermöglicht werden.

In einer weiteren Ausführungsform des Formwerkzeugs kann sich der wenigstens eine Vorverteilerraum zumindest im Bereich des wenigstens einen Einströmabschnitts in wenigstens einer Raumrichtung des Formwerkzeugs, insbesondere in Breitenrichtung, wenigstens über 50%, insbesondere wenigstens über 55%, weiter insbesondere wenigstens über 60%, weiter insbesondere wenigstens über 65%, weiter insbesondere wenigstens über 70%, weiter insbesondere wenigstens über 75%, weiter insbesondere wenigstens über 80%, weiter insbesondere wenigstens über 85%, weiter insbesondere wenigstens über 90%, weiter insbesondere wenigstens über 95%, gegebenenfalls sogar über 100% der maximalen Abmessungen des jeweiligen Formwerkzeughälftenteils erstrecken. Der Einfluss des Vorverteilerraums auf die Strömungseigenschaften des durch den Zwischenraum strömenden Temperierfluids, d. h. insbesondere des in den Zwischenraum einströmenden Temperierfluids, kann sonach über die jeweilige räumliche Erstreckung des Vorverteilerraums gezielt gewählt werden.

Gemäß der Erfindung ist die wenigstens eine Formwerkzeughälfte oder wenigstens eine Formwerkzeughälfte, gegebenenfalls zusätzlich, mit wenigstens einem Ausströmabschnitt für ein aus dem Zwischenraum ausströmendes Temperierfluid und wenigstens einem mit diesem kommunizierenden, dem Vorverteilerraum gegenüber liegend angeordneten, durch Wandungsabschnitte der wenigstens einen Formwerkzeughälfte begrenzten Nachverteilerraum ausgebildet.

Ein entsprechender Nachverteilerraum kann insbesondere in einem Formwerkzeughälftenteil der jeweiligen Formwerkzeughälfte ausgebildet sein und somit durch Wandungsabschnitte des jeweiligen Formwerkzeughälftenteils begrenzt sein. Gegebenenfalls kann ein entsprechender Nachverteilerraum auch gemeinsam durch wenigstens zwei Formwerkzeughälftenteile der jeweiligen Formwerkzeughälfte ausgebildet und somit durch Wandungsabschnitte der wenigstens zwei Formwerkzeughälftenteile begrenzt sein. Mithin kann ein jeweiliges Formwerkzeughälftenteil durch einen entsprechenden Nachverteilerraum konstruktiv so konfiguriert sein, dass ein aus diesem ausströmendes Temperierfluid jedenfalls nicht vollständig unmittelbar aus dem Zwischenraum, sondern zunächst in den Nachverteilerraum strömt, in welchem dieses sich räumlich verteilen und erst nach entsprechender Verteilung, insbesondere flächenmäßig, möglichst gleichmäßig verteilt aus der Formwerkzeughälfte ausströmen kann. Derart kann vermieden werden, dass das Temperierfluid nur an einer bestimmten Stelle aus dem Zwischenraum ausströmt, was gegebenenfalls dazu führen kann, dass sich das Temperierfluid ungleichmäßig in dem Zwischenraum verteilt, was wiederum zu einer ungleichmäßigen Temperaturverteilung innerhalb der jeweiligen Formwerkzeughälfte und damit einer ungleichmäßigen Temperierung über die jeweilige Formwerkzeughälfte führt.

Innerhalb des Nachverteilerraums sind mehrere räumlich verteilt angeordnete oder ausgebildete Ausströmabschnitte vorhanden, sodass auch ein möglichst gleichmäßiges Ausströmen von Temperierfluid aus dem Nachverteilerraum gewährleistet werden kann.

Ein jeweiliger Ausströmabschnitt kann in allen Fällen eine, z. B. flanschartige bzw. -förmige, Anschlussmöglichkeit zum Anschließen eines mit einer Temperierfluidversorgung verbundenen Leitungselements, wie z. B. eines Schlauchs, Rohrs, etc., aufweisen. Mithin können einem mehrere Ausströmabschnitte aufweisenden Nachverteilerraum gegebenenfalls mehrere Temperierfluidversorgungen zugeordnet sein, über welche sich, z. B. über eine, z. B. als Fluidverteilerblock ausgebildete, Fluidverteilereinrichtung, abhängig oder unabhängig voneinander ein Temperierfluid aus dem Nachverteilerraum ausströmen lässt. Eine entsprechende Anschlussmöglichkeit kann z. B. mit einem Gewinde versehen sein, auf welches sich ein entsprechendes Gegengewinde eines Leitungselements aufschrauben lässt.

Gemäß der Erfindung sind die einen jeweiligen Nachverteilerraum begrenzenden Wandungsabschnitte eines jeweiligen Formwerkzeughälftenteils - hierunter sind insbesondere die den Nachverteilerraum gegenüber dem Zwischenraum abgrenzenden Wandungsabschnitte eines jeweiligen Formwerkzeughälftenteils zu verstehen - zumindest abschnittsweise zinnenartig bzw. -förmig angeordnet oder ausgebildet.

Durch eine entsprechende Zinnenstruktur, welche sich im Allgemeinen durch unterschiedlich dimensionierte, d. h. insbesondere unterschiedlich hohe, Wandungsabschnitte in gleichmäßig oder ungleichmäßig abwechselnder Anordnung auszeichnet, kann ein, z. B. im Hinblick auf bestimmte Strömungseigenschaften des Temperierfluids, wie z. B. eine bestimmte Strömungsgeschwindigkeitsverteilung, gewünschtes Einströmen des Temperierfluids aus dem Zwischenraum in den Nachverteilerraum ermöglicht werden.

In einer weiteren Ausführungsform des Formwerkzeugs kann sich der wenigstens eine Nachverteilerraum zumindest im Bereich des wenigstens einen Ausströmabschnitts in wenigstens einer Raumrichtung des Formwerkzeugs, insbesondere in Breitenrichtung, wenigstens über 50%, insbesondere wenigstens über 55%, weiter insbesondere wenigstens über 60%, weiter insbesondere wenigstens über 65%, weiter insbesondere wenigstens über 70%, weiter insbesondere wenigstens über 75%, weiter insbesondere wenigstens über 80%, weiter insbesondere wenigstens über 85%, weiter insbesondere wenigstens über 90%, weiter insbesondere wenigstens über 95%, gegebenenfalls sogar über 100% der maximalen Abmessungen des jeweiligen Formwerkzeughälftenteils erstrecken. Der Einfluss des Nachverteilerraums auf die Strömungseigenschaften des durch den Zwischenraum strömenden Temperierfluids, d. h. insbesondere des aus dem Zwischenraum ausströmenden Temperierfluids, kann sonach über die jeweilige räumliche Erstreckung des Nachverteilerraums gezielt gewählt werden.

Ein oder mehrere Einströmabschnitte des Vorverteilerraums respektive diesen zugeordnete Temperierfluidversorgungen können mit einem oder mehreren Ausströmabschnitten des Nachverteilerraums respektive diesen zugeordneten Temperierfluidversorgungen kommunizieren, sodass sich ein Temperierfluid kreislaufartig zwischen dem oder den Einströmabschnitt(en), dem Zwischenraum und dem oder den Ausströmabschnitt(en) zirkulieren lässt. In einen entsprechenden Kreislauf kann gegebenenfalls wenigstens eine Wärmetauschereinrichtung (nicht gezeigt) geschaltet angeordnet sein, über welche sich eine Temperierung des Temperierfluids auf eine bestimmte Zieltemperatur oder einen gewünschten Zieltemperaturbereich realisieren lässt.

Gemäß der Erfindung weist der Formwerkzeug **eine mehrere zumindest** abschnittsweise, gegebenenfalls vollständig, zwischen dem bzw. einem Vorverteilerraum und dem bzw. einem Nachverteilerraum angeordnete oder ausgebildete Strömungsbeeinflussungselemente umfassende Strömungsbeeinflussungsstruktur aufweisen. Die Strömungsbeeinflussungsstruktur kann sich sonach zumindest abschnittsweise, gegebenenfalls vollständig, zwischen dem Vorverteilerraum und dem Nachverteilerraum, mithin in dem Zwischenraum, erstrecken. Die Strömungsbeeinflussungsstruktur respektive die diese bildenden Strömungsbeeinflussungselemente sind typischerweise in dem Zwischenraum ausgebildet, um die Strömungseigenschaften des, insbesondere ausgehend von dem bzw. einem entsprechenden Vorverteilerraum in Richtung des bzw. eines entsprechenden Nachverteilerraums, durch den Zwischenraum strömenden Temperierfluids gezielt zu beeinflussen. Derart kann gezielt ein bestimmtes Temperierverhalten der jeweiligen Formwerkzeughälfte realisiert werden, als dieses typischerweise maßgeblich durch Strömungseigenschaften des Temperierfluids beeinflusst wird.

In einer weiteren Ausführungsform des Formwerkzeugs kann die Strömungsbeeinflussungsstruktur in gleichmäßiger oder ungleichmäßiger Anordnung und/oder Ausrichtung mehrere Strömungsbeeinflussungselemente gleicher oder ungleicher Geometrie umfassen. Mithin lassen sich die Strömungseigenschaften des den Zwischenraum durchströmenden Temperierfluids insbesondere durch eine gezielt gewählte gleichmäßige oder ungleichmäßige Anordnung und/oder Ausrichtung von Strömungsbeeinflussungselementen gleicher oder ungleicher Geometrie beeinflussen. Die Strömungsbeeinflussungsstruktur kann dabei ein oder mehrere Bereiche mit gleichmäßig angeordneten und/oder ausgerichteten Strömungsbeeinflussungselementen gleicher oder ungleicher Geometrie und/oder ein oder mehrere Bereiche mit ungleichmäßig angeordneten und/oder ausgerichteten Strömungsbeeinflussungselementen gleicher oder ungleicher Geometrie aufweisen.

In allen Ausführungsbeispielen können die den Zwischenraum begrenzenden Wandungsabschnitte wenigstens eines Formwerkzeughälftenteils flächenmäßig wenigstens zu 50% insbesondere wenigstens zu 55%, weiter insbesondere zu wenigstens 60%, weiter insbesondere zu wenigstens 65%, weiter insbesondere zu wenigstens 70%, weiter insbesondere zu wenigstens 75%, weiter insbesondere zu wenigstens 80%, weiter insbesondere zu wenigstens 85%, weiter insbesondere zu wenigstens 90%, weiter insbesondere zu wenigstens 95%, mit entsprechenden Strömungsbeeinflussungselementen bedeckt sein.

In einer weiteren Ausführungsform des Formwerkzeugs kann ein jeweiliges Strömungsbeeinflussungselement eine, insbesondere sich in Richtung einer die Formwerkzeugkavität begrenzende Kontur des jeweiligen Formwerkzeughälftenteils ausgerichtete, säulenartige bzw. -förmige Grundform aufweisen. Unter einer säulenartigen bzw. -förmigen Grundform ist auch zu verstehen, dass ein jeweiliges Strömungsbeeinflussungselement gegebenenfalls ein oder mehrere sich in unterschiedlichen Raumrichtungen erstreckend ausgerichtete Strömungsbeeinflussungselementabschnitte aufweisen kann. Auch Freiformgeometrien sind denkbar.

Die Querschnittsgeometrie eines jeweiligen Strömungsbeeinflussungselements ist - dies grundsätzlich unabhängig von seiner säulenartige bzw. -förmige Grundform - grundsätzlich im Hinblick auf eine gewünschte strömungstechnische Beeinflussung der Strömungseigenschaften des Temperierfluids an der jeweiligen Stelle, an welcher das jeweilige Strömungsbeeinflussungselement in dem Zwischenraum angeordnet ist, gewählt. Lediglich beispielhaft sei deshalb auf runde bzw. rundliche oder eckige, ovale, ellipsoide Querschnittsgeometrien oder vieleckige Querschnittsgeometrien zu verweisen. Insbesondere ist auch eine zitronenartig bzw. -förmig Querschnittsgeometrie denkbar. Mithin können Strömungsbeeinflussungselemente z. B. eine Vierkant- oder Spantenstruktur aufweisen. Auch Freiformquerschnittsgeometrien sind denkbar.

In einer weiteren Ausführungsform des Formwerkzeugs kann ein freies Ende eines jeweiligen Strömungsbeeinflussungselements eine Abstützfläche für ein mit dem jeweiligen Formwerkzeughälftenteil verbundenes Formwerkzeughälftenteil bildet. Ein jeweiliges Strömungsbeeinflussungselement kann sich sonach diese gegeneinander abstützend, den Zwischenraum durchsetzend zwischen einem ersten Formwerkzeughälftenteil und einem zweiten Formwerkzeughälftenteil angeordnet oder ausgebildet sein. Derart kann ein jeweiliges Strömungsbeeinflussungselement zusätzlich eine Abstütz- bzw. Tragfunktion ausüben, welche sich positiv auf die strukturellen Eigenschaften, d. h. insbesondere die Stabilität, der jeweiligen Formwerkzeughälfte auswirkt. Insbesondere kann - dies gilt insbesondere für großdimensionierte Formwerkzeughälften - ein unerwünschtes Durchbiegen jeweiliger Formwerkzeughälftenteile verhindert werden.

In einer weiteren Ausführungsform des Formwerkzeugs können die jeweiligen Formwerkzeughälftenteile einer entsprechend mehrteilig ausgebildeten Formwerkzeughälfte (beschädigungs- bzw. zerstörungsfrei) lösbar miteinander verbindbar oder verbunden sein. Die Verbindung der jeweiligen Formwerkzeughälftenteile kann sonach bedarfsweise gelöst werden, was Service- und/oder Reparaturarbeiten an der jeweiligen Formwerkzeughälfte erheblich vereinfachen kann. Um auch bei einer lösbaren Verbindung jeweiliger Formwerkzeughälftenteile eine unerwünschte Leckage von Temperierfluid aus dem Zwischenraum zu verhindern, können ein oder mehrere Dichtelemente vorhanden sein, welche eine Abdichtung der jeweiligen Formwerkzeughälfte, insbesondere in der Fügeebene der jeweiligen Formwerkzeughälftenteile, ermöglichen.

Die lösbare Verbindung jeweiliger Formwerkzeughälftenteile kann z. B. durch form- und/oder kraftschlüssige Verbindungsarten realisiert sein. Die eine jeweilige mehrteilig ausgebildete Formwerkzeughälfte bildenden Formwerkzeughälftenteile können sonach z. B. durch eine Schraub- oder Nietverbindung lösbar aneinander befestigt sein. Für Schraub- oder Nietverbindungen können die jeweiligen Formwerkzeughälftenteile mit entsprechenden Aufnahmevorkehrungen, wie z. B. Bohrungen, zur Aufnahme von Schraub- oder Nietelementen ausgebildet sein.

Für alle Ausführungsformen des Formwerkzeugs gilt ferner, dass wenigstens ein Formwerkzeughälftenteil z. B. eine schalen- oder wannenartige Grundform aufweisen kann. Die schalen- oder wannenartige Grundform begünstigt die Ausbildung eines entsprechenden Zwischenraums. Grundsätzlich denkbar sind jedoch auch andere Grundformen, wie z. B. plattenartige bzw. -förmige Grundformen. Wie weiter oben angedeutet, ist die Grundform der Formwerkzeughälften und damit jeweiliger Formwerkzeughälftenteile typischerweise im Hinblick auf das vermittels des Formwerkzeugs konkret herzustellende Partikelschaumformteil gewählt.

Für alle Ausführungsformen des Formwerkzeugs gilt ferner, dass dieses als Tauchkantenwerkzeug ausgebildet sein kann. Mithin kann eine Formwerkzeughälfte mit wenigstens einem Tauchkantenabschnitt ausgebildet sein, welcher in der Schließstellung zumindest abschnittsweise in die Formwerkzeugkavität eintaucht. Derart kann gegebenenfalls eine Komprimierung des in die Formwerkzeugkavität eingefüllten Partikelschaummaterials einhergehen.

Für alle Ausführungsformen des Formwerkzeugs gilt ferner, dass dieses mit einer durch ein oder mehrere Entlüftungselemente umfassenden Entlüftungsstruktur ausgebildet sein kann. Mithin kann wenigstens eine Formwerkzeughälfte mit, z. B. durch Öffnungen, Spalte, Vertiefungen, etc., gebildeten Entlüftungselementen versehen sein, welche, etwa im Rahmen eines Befüllens der Formwerkzeugkavität mit Partikelschaummaterial, eine Entlüftung der Formwerkzeugkavität ermöglichen. Entsprechende Entlüftungselemente können auch durch Tauchkantenspalte gebildet sein oder solche umfassen.

Sofern keine entsprechende Entlüftungsstruktur vorhanden ist, kann das Formwerkzeug in der Schließstellung abgedichtet sein, sodass ein unerwünschter Austritt eines in die bzw. in der Formwerkzeugkavität strömenden Fluids, d. h. eines Gases und/oder einer Flüssigkeit, aus der Formwerkzeugkavität nicht möglich ist.

Ein zweiter Aspekt nicht beansprucht betrifft eine Formwerkzeughälfte für ein Formwerkzeug nach dem ersten Aspekt der Erfindung. Die Formwerkzeughälfte umfasst wenigstens zwei unter Ausbildung eines von einem der Temperierung der wenigstens einen Formwerkzeughälfte dienenden Temperierfluid durchströmbaren Zwischenraums miteinander verbindbare oder verbundene Formwerkzeughälftenteile. Sämtliche Ausführungen im Zusammenhang mit dem Formwerkzeug gemäß dem ersten Aspekt der Erfindung gelten analog für die Formwerkzeughälfte gemäß dem zweiten Aspekt der Erfindung.

Ein dritter Aspekt nicht beansprucht betrifft ein Verfahren zur Herstellung eines Partikelschaumformteils insbesondere unter Verwendung wenigstens eines Formwerkzeugs nach dem ersten Aspekt Erfindung oder einer Formwerkzeughälfte nach dem zweiten Aspekt. Sämtliche Ausführungen im Zusammenhang mit dem Formwerkzeug gemäß dem ersten Aspekt der Erfindung gelten analog für das Verfahren nach dem dritten Aspekt

Das Verfahren umfasst typischerweise zumindest: einen Schritt des Befüllens der Formwerkzeugkavität mit einem Partikelschaummaterial, einen Schritt des Temperierens des Partikelschaummaterials zur Ausbildung eines Partikelschaumformteils und einen Schritt des Entnehmens des Partikelschaumformteils aus der Formwerkzeugkavität. Das Temperieren erfolgt insbesondere dadurch, dass der Zwischenraum wenigstens einer mehrteilig ausgebildeten Formwerkzeughälfte mit wenigstens einem der Temperierung der wenigstens einen Formwerkzeughälfte dienenden Temperierfluid durchströmt wird. Vor, während oder nach dem Befüllen der Formwerkzeugkavität mit einem Partikelschaummaterial kann wenigstens ein, gegebenenfalls vorgeformtes, Dekor- oder Einlegerelement, wie z. B. eine Folie, z. B. aus Metall oder Kunststoff, oder eine Funktionskomponente, wie z. B. eine Elektronikkomponente, eine Sensorkomponente, eine Versteifungskomponente, etc., in die Formwerkzeugkavität eingebracht werden. Konkret kann es sich bei einem entsprechenden Dekor- oder Einlegerelement um eine tiefgezogene, gegebenenfalls koextrudierte, Folie aus einem thermoplastischen Kunststoff, wie z. B. ABS- oder ABS-PMMA, handeln. Die Wandstärke eines entsprechenden Dekor- oder Einlegerelements kann in allen Fällen beispielsweise in einem Bereich zwischen 0,2 und 13 mm liegen.

Ein vierter Aspekt nicht beansprucht betrifft ein Partikelschaumformteil, welches mit einem Formwerkzeug nach dem ersten Aspekt der Erfindung, d. h. insbesondere durch Verwendung eines Formwerkzeugs nach dem ersten Aspekt der Erfindung, oder durch ein Verfahren nach dem dritten Aspekt der Erfindung hergestellt wurde. Sämtliche Ausführungen im Zusammenhang mit dem Formwerkzeug gemäß dem ersten Aspekt der Erfindung und dem Verfahren nach dem dritten Aspekt gelten analog für das Partikelschaumformteil nach dem vierten Aspekt.

Die Erfindung ist anhand von Ausführungsbeispielen in den Zeichnungen näher erläutert. Dabei zeigt:
Fig. 1 eine Prinzipdarstellung eines Formwerkzeugs gemäß einem Ausführungsbeispiel; und
Fig. 2 - 4 jeweils eine Prinzipdarstellung einer Einzelheit eines Formwerkzeugs gemäß einem Ausführungsbeispiel.

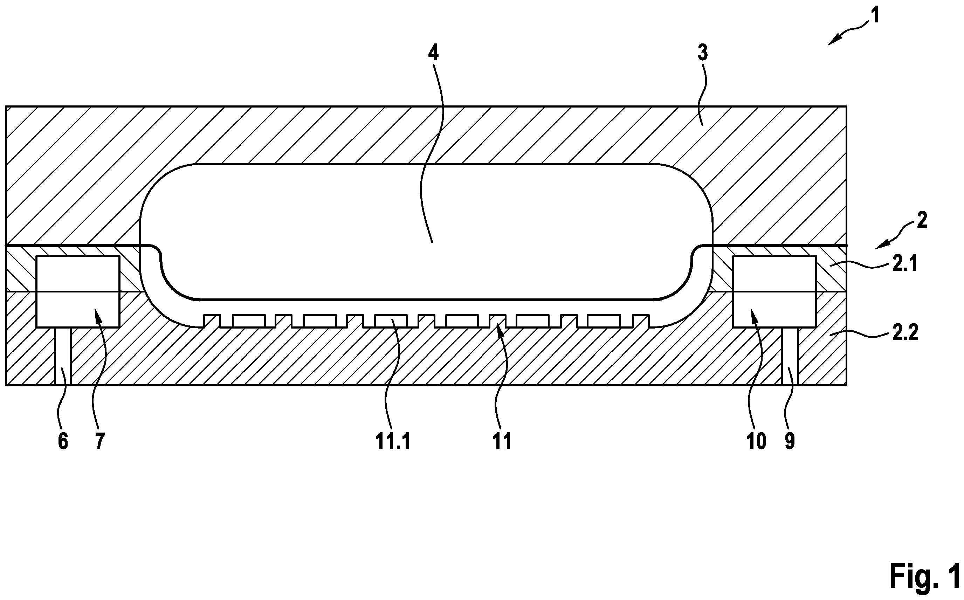

Fig. 1 eine Prinzipdarstellung eines Formwerkzeugs 1 zur Herstellung eines Partikelschaumformteils in einer geschnittenen Seitenansicht. Das Formwerkzeug 1 ist sonach zur Verarbeitung von expandierbarem oder expandiertem Partikelschaummaterial zur Herstellung eines Partikelschaumformteils, eingerichtet.

Das vermittels des Formwerkzeugs 1 verarbeitbare Partikelschaummaterial liegt vor seiner Verarbeitung mit dem Formwerkzeug 1 typischerweise partikelförmig vor. Bei dem Partikelschaummaterial bzw. entsprechenden Partikelschaummaterialpartikeln kann es sich um ein noch nicht expandiertes Partikelschaummaterial bzw. noch nicht expandierte Partikelschaummaterialpartikel, um ein vorexpandiertes Partikelschaummaterial bzw. vorexpandierte Partikelschaummaterialpartikel oder um ein vollständig expandiertes Partikelschaummaterial bzw. um vollständig expandierte Partikelschaummaterialpartikel handeln. Für ein noch nicht expandiertes Partikelschaummaterial wie auch für ein vorexpandiertes Partikelschaummaterial gilt, dass dieses typischerweise expandierbar ist, d. h. in einem Expansionsvorgang (weiter) expandiert werden können. Für ein vollständig expandiertes Partikelschaummaterial gilt, dass dieses typischerweise nicht mehr (weiter) expandiert werden kann. In allen Fällen können auch Partikelschaummaterialien, welche mit einer, z. B. thermisch, aktivierbaren Funktionsschicht beschichtete und/oder imprägnierte Partikelschaummaterialpartikel umfassen, verwendet werden. Konkrete Beispiele für vermittels des Formwerkzeugs 1 verarbeitbare Partikelschaummaterialien sind in nicht abschließender Aufzählung expandierbare bzw. expandierte Polyolefine, wie z. B. expandierbares bzw. expandiertes Polyethylen oder expandierbares bzw. expandiertes Polypropylen, expandierbare bzw. expandierte Polystyrole oder expandierbare bzw. expandierte Acrylnitril-Butadien-Styrol-Copolymere.

Das Formwerkzeug 1 ist insbesondere zur rein konduktiven bzw. konvektiven, bevorzugt dampffreien bzw. dampflosen, Verarbeitung eines Partikelschaummaterial, d. h. insbesondere eines vollständig expandierten Partikelschaummaterials, eingerichtet.

Das Formwerkzeug 1 kann insbesondere zur Herstellung großformatiger bzw. -volumiger Partikelschaumformteile eingerichtet sein. Bei entsprechenden großformatigen bzw. -volumigen Partikelschaumformteilen handelt es sich insbesondere um Partikelschaumformteile mit einer räumlichen Ausdehnung in wenigstens einer Raumrichtung von mehreren Zentimetern bzw. mehreren Dezimetern. Ein vermittels des Formwerkzeugs 1 herstellbares Partikelschaumformteil kann sonach z. B. eine Höhe und/oder Breite und/oder Tiefe von mehreren Zentimetern bzw. mehreren Dezimetern aufweisen.

Zudem kann das Formwerkzeug 1 insbesondere zur Herstellung dickwandiger Partikelschaumformteile eingerichtet sein. Bei entsprechenden dickwandigen Partikelschaumformteilen handelt es sich insbesondere um Partikelschaumformteile mit Wandstärken von mehreren Zentimetern bzw. mehreren Dezimetern. Ein vermittels des Formwerkzeugs 1 herstellbares Partikelschaumformteil kann sonach z. B. eine Wandstärke von mehreren Zentimetern bzw. mehreren Dezimetern aufweisen.

Bei einem vermittels des Formwerkzeugs 1 herstellbaren Partikelschaumformteil kann es sich im Allgemeinen um ein technisches Bauteil oder um eine technische Bauteilgruppe handeln. Konkret kann es sich bei einem entsprechenden Partikelschaumformteil insbesondere um ein Abdeckungs- oder Verkleidungsteil handeln. Ein entsprechendes Partikelschaumformteil kann insbesondere als Bauteil für ein Fahrzeug, d. h. insbesondere ein Bauteil für ein Kraftfahrzeug, Luftfahrzeug, etc., oder für eine sonstige Maschine, z. B. aus dem Bereich der Medizintechnik, vorgesehen sein.

Anhand von Fig. 1 ist ersichtlich Das Formwerkzeug 1 umfasst in dem Ausführungsbeispiel zwei Formwerkzeughälften 2, 3, welche gemeinsam eine formgebende Formwerkzeugkavität 4 des Formwerkzeugs 1 begrenzen bzw. definieren. Die Formwerkzeughälften 2, 3 weisen sonach jeweils eine oder mehrere formgebende Wandungen auf, welche jeweils eine die formgebende Formwerkzeugkavität 4 des Formwerkzeugs 1 begrenzende bzw. definierende Kontur bilden. Die konkrete Formgebung jeweiliger formwerkzeughälftenseitiger formgebender Wandungen und damit der formgebenden Formwerkzeugkavität 4 des Formwerkzeugs 1 ist typischerweise im Hinblick auf die geometrisch-konstruktive Gestaltung des vermittels des Formwerkzeugs 1 konkret herzustellenden Partikelschaumformteils gewählt.

Wenigstens eine Formwerkzeughälfte 2, 3 kann relativ zu der jeweiligen anderen Formwerkzeughälfte 2, 3 bewegbar gelagert sein. Derart kann eine Offenstellung des Formwerkzeugs 1 realisiert werden, in welcher, z. B. zum Zwecke der Entnahme eines hergestellten Partikelschaumformteils, eine Zugangsmöglichkeit in die Formwerkzeugkavität 4 gegeben ist, und eine in Fig. 1 beispielhaft gezeigten Schließstellung des Formwerkzeugs 1 realisiert werden, in welcher keine Zugangsmöglichkeit in die Formwerkzeugkavität 4 gegeben ist. Zur Überführung der jeweiligen Formwerkzeughälfte(n) 2, 3 in eine jeweilige Offen- und Schließstellung kann dem Formwerkzeug 1 wenigstens eine, z. B. (elektro)motorisch implementierte, Antriebseinrichtung (nicht gezeigt) zugeordnet sein.

Anhand von Fig. 1 ist ferner ersichtlich, dass wenigstens eine Formwerkzeughälfte 2, 3 zwei Formwerkzeughälftenteile 2.1, 2.2 umfassen kann, welche miteinander unter Ausbildung der jeweiligen Formwerkzeughälfte 2 verbindbar oder verbunden sind. Wenigstens eine Formwerkzeughälfte 2 ist sonach mehrteilig ausgebildet. Wenigstens ein Formwerkzeughälftenteil 2.1 der wenigstens zwei Formwerkzeughälftenteile 2.1, 2.2 der jeweiligen mehrteilig ausgebildeten Formwerkzeughälfte 2 weist die erwähnte formgebende Wandung der jeweiligen Formwerkzeughälfte 2 auf. Wenngleich in Fig. 1 beispielhaft nur für die untere Formwerkzeughälfte 2 eine mehrteilige Ausbildung gezeigt ist, könnte alternativ oder ergänzend die obere Formwerkzeughälfte 3 in entsprechender Weise mehrteilig ausgebildet sein.

Anhand der Fig. ist ersichtlich, dass die zwei Formwerkzeughälftenteile 2.1, 2.2 miteinander unter Ausbildung eines von einem der Temperierung der Formwerkzeughälfte 2 dienenden Temperierfluid, wie z. B. einem Temperiergas und/oder einer Temperierflüssigkeit, durchströmbaren Zwischenraums 5 verbindbar oder verbunden sind. Die mehrteilig ausgebildete Formwerkzeughälfte 2 ist sonach durch den sich - jedenfalls im bestimmungsgemäß verbundenen Zustand der Formwerkzeughälftenteile 2.1, 2.2 - zwischen den zwei Formwerkzeughälftenteilen 2.1, 2.2 erstreckenden Zwischenraum 5 und der Möglichkeit, diesen sonach auch als Strömungsraum zu bezeichnenden Zwischenraum 5 mit einem der Temperierung der Formwerkzeughälfte 2 dienenden Temperierfluid zu durchströmen, mit einer integrierten Temperiereinrichtung ausgebildet. Da sich der Zwischenraum 5 typischerweise nahezu vollständig in wenigstens einer Raumrichtung, d. h. z. B. einer Breiten- und/oder Längenrichtung, der jeweiligen Formwerkzeughälfte 2 erstreckt, weist die Temperiereinrichtung eine große Wärmeübertragungsfläche auf und ermöglicht eine großflächige Temperierung von im Betrieb des Formwerkzeugs 1 in der Formwerkzeugkavität 4 befindlichem Partikelschaummaterial.

Durch die mehrteilige Ausbildung der Formwerkzeughälfte 2 mit einem sich zwischen den zwei Formwerkzeughälftenteilen 2.1, 2.2 erstreckenden Zwischenraum 5 und der Möglichkeit, diesen mit einem der Temperierung der Formwerkzeughälfte 2 dienenden Temperierfluid zu durchströmen, ist sonach eine konstruktiv vergleichsweise einfach, jedoch im Hinblick auf ihre Temperierbarkeit hocheffizient konfigurierte Formwerkzeughälfte 2 realisiert.

Durch die mehrteilige Ausbildung der Formwerkzeughälfte 2 können zudem funktionelle bzw. konstruktive Freiheitsgrade geschaffen werden, als nur ein Formwerkzeughälftenteil 2.1, 2.2 mit einer entsprechenden formgebenden Wandung ausgebildet sein muss, das andere Formwerkzeughälftenteil 2.1, 2.2 kann im Hinblick auf andere Anforderungen, wie z. B. gewünschte Strömungseigenschaften eines den Zwischenraum 5 durchströmenden Temperierfluids, ausgebildet sein bzw. werden.

Insofern können sich die zwei Formwerkzeughälftenteile 2.1, 2.2 neben ihrer Formgebung zumindest abschnittsweise auch in anderen geometrisch-konstruktiven Parametern, wie z. B. Wandstärke, unterscheiden. Denkbar ist es ebenso, dass sich die zwei Formwerkzeughälftenteile 2.1, 2.2 zumindest abschnittsweise aus, sich z. B. im Hinblick auf ihre thermischen Eigenschaften, gleichen oder unterschiedlichen Materialien bzw. Materialstrukturen gebildet sein können. Beispielsweise kann ein Formwerkzeughälftenteil 2.1, 2.2, welches die formgebende Wandung aufweist, aus einem Material bzw. einer Materialstruktur, wie z. B. einem Metall, insbesondere einem Leichtmetall, mit einer im Vergleich höheren Wärmeübertragungskapazität gebildet sein, um eine möglichst effiziente Wärmeübertragung auf das Partikelschaummaterial zu realisieren. An dieser Stelle sei allgemein ergänzt, dass die Formwerkzeughälften 2, 3 bzw. Formwerkzeughälftenteile 2.1, 2.2 z. B. aus Metall, Kunststoff, Keramik oder Verbundmaterialien gebildet sein können. Ebenso sei ergänzt, dass die Formwerkzeughälften 2, 3 z. B. durch spanabhebende Verfahren oder Gussverfahren hergestellt sein können.

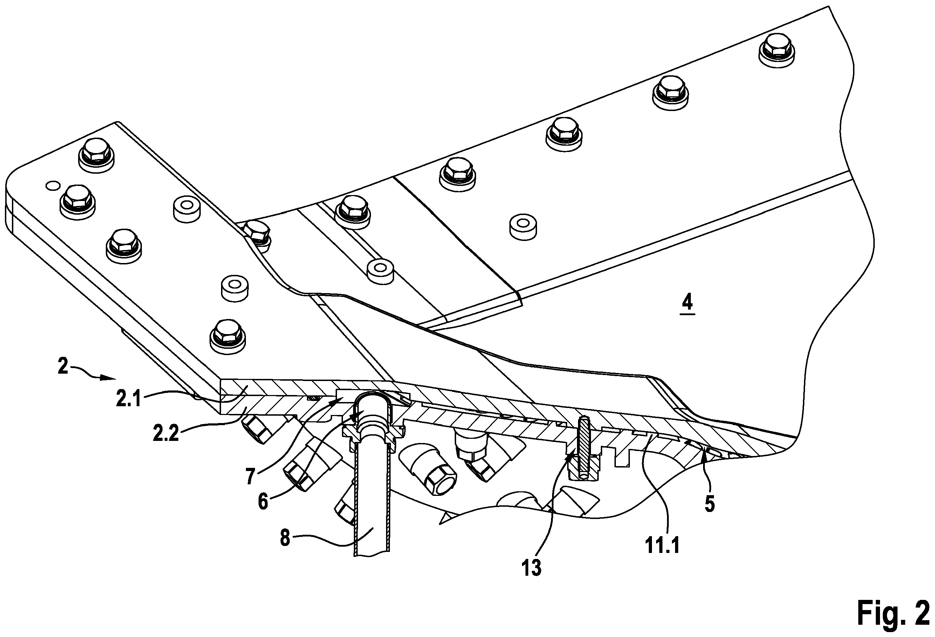

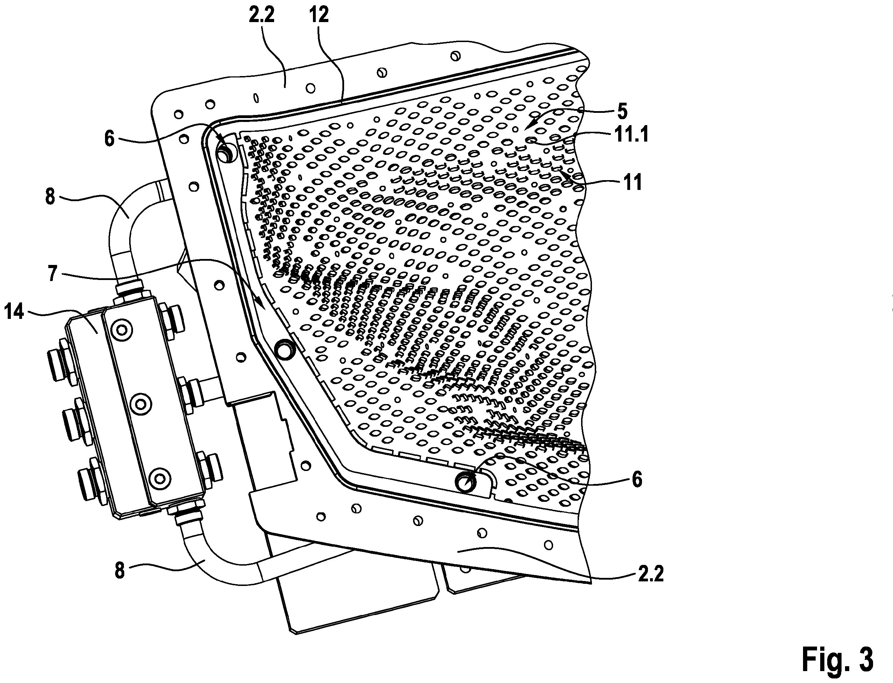

Anhand der vergrößert dargestellten Einzelheit gemäß den Fig. 2, 3, wobei Fig. 2 einen Ausschnitt der im bestimmungsgemäßen Zustand übereinander angeordneten Formwerkzeughälftenteile 2.1, 2.2 und Fig. 3 eine perspektivische Ansicht auf das untere Formwerkzeughälftenteil 2.2 zeigt, ist ersichtlich, dass die bzw. eine mehrteilig ausgebildete Formwerkzeughälfte 2 mit einem oder mehreren Einströmabschnitten 6 für ein in den Zwischenraum 5 einströmendes Temperierfluid und wenigstens einem mit diesem kommunizierenden, durch Wandungsabschnitte der Formwerkzeughälfte 2 begrenzten Vorverteilerraum 7 ausgebildet ist. Ersichtlich kann der Vorverteilerraum 7 gemeinsam durch die zwei Formwerkzeughälftenteile 2.1, 2.2 ausgebildet und somit durch Wandungsabschnitte der zwei Formwerkzeughälftenteile 2.1, 2.2 begrenzt sein. Mithin kann das Formwerkzeughälftenteil 2 durch einen entsprechenden Vorverteilerraum 7 konstruktiv so konfiguriert sein, dass ein in dieses einströmendes Temperierfluid jedenfalls nicht vollständig unmittelbar in den Zwischenraum 5, sondern zunächst in den Vorverteilerraum 7 strömt, in welchem dieses sich räumlich verteilen und erst nach entsprechender Verteilung, insbesondere flächenmäßig, möglichst gleichmäßig verteilt in den Zwischenraum 5 einströmen kann.

Anhand der Fig. 2, 3 ist ferner ersichtlich, dass innerhalb des Vorverteilerraums 7 mehrere räumlich verteilt angeordnete oder ausgebildete Einströmabschnitte 6 vorhanden sind sodass auch ein möglichst gleichmäßiges Einströmen von Temperierfluid in den Vorverteilerraum 7 gewährleistet werden kann.

Ein jeweiliger Einströmabschnitt 6 kann in allen Fällen eine, z. B. flanschartige bzw. -förmige, Anschlussmöglichkeit zum Anschließen eines mit einer Temperierfluidversorgung (nicht gezeigt) verbundenen Leitungselements 8, wie z. B. eines Schlauchs, Rohrs, etc., aufweisen. Mithin können einem mehrere Einströmabschnitte 6 aufweisenden Vorverteilerraum 7 gegebenenfalls mehrere Temperierfluidversorgungen zugeordnet sein, über welche sich, z. B. über eine, z. B. als Fluidverteilerblock 14 ausgebildete, Fluidverteilereinrichtung, abhängig oder unabhängig voneinander ein Temperierfluid in den Vorverteilerraum 7 einströmen lässt. Eine entsprechende Anschlussmöglichkeit kann z. B. mit einem Gewinde versehen sein, auf welches sich ein entsprechendes Gegengewinde eines Leitungselements 8 aufschrauben lässt.

Anhand der Fig. 2, 3 ist ferner ersichtlich, dass die den Vorverteilerraum 7 begrenzenden Wandungsabschnitte eines jeweiligen Formwerkzeughälftenteils 2.1, 2.2 - hierunter sind insbesondere die den Vorverteilerraum 7 gegenüber dem Zwischenraum 5 abgrenzenden Wandungsabschnitte der Formwerkzeughälftenteile 2.1, 2.2 zu verstehen - zinnenartig bzw. - förmig angeordnet oder ausgebildet sind.

Durch eine entsprechende Zinnenstruktur, welche sich, wie Fig. 3 beispielhaft zeigt, durch unterschiedlich dimensionierte, d. h. insbesondere unterschiedlich hohe, Wandungsabschnitte in gleichmäßig oder ungleichmäßig abwechselnder Anordnung auszeichnet, kann ein, z. B. im Hinblick auf bestimmte Strömungseigenschaften des Temperierfluids, wie z. B. eine bestimmte Strömungsgeschwindigkeitsverteilung, gewünschtes Einströmen des Temperierfluids aus dem Vorverteilerraum 7 in den Zwischenraum 5 ermöglicht werden.

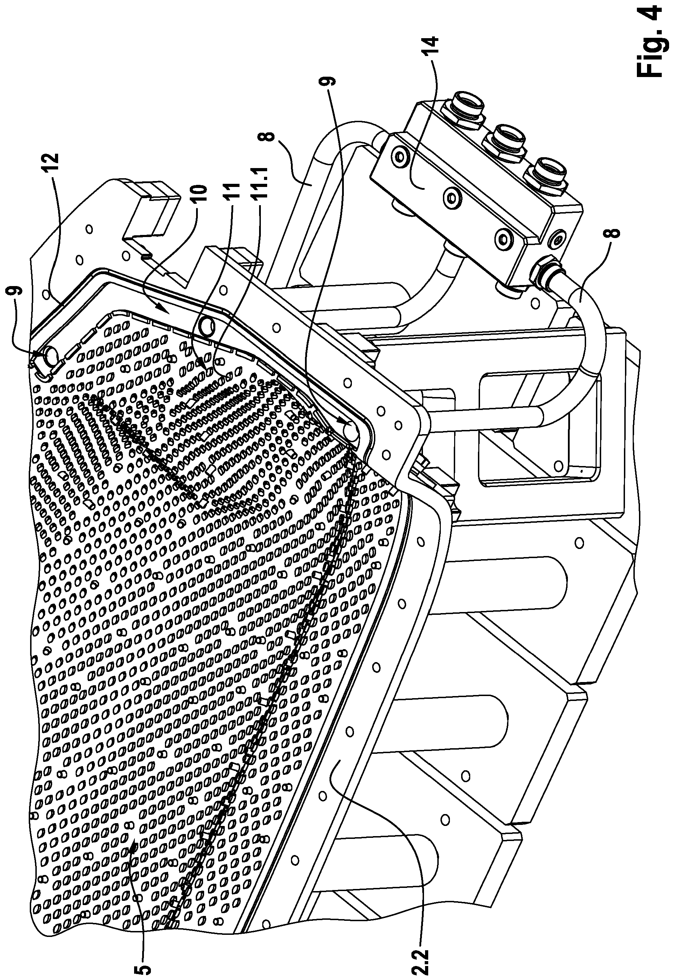

Anhand der vergrößert dargestellten Einzelheit gemäß Fig. 4, wobei Fig. 4 eine perspektivische Ansicht auf das untere Formwerkzeughälftenteil 2.2 zeigt, ist ersichtlich, dass die Formwerkzeughälfte 2 mit einem oder mehreren Ausströmabschnitten 9 für ein aus dem Zwischenraum 5 ausströmendes Temperierfluid und wenigstens einem mit diesen kommunizierenden, dem Vorverteilerraum 7 gegenüber liegend angeordneten, durch Wandungsabschnitte der Formwerkzeughälte 2 begrenzten Nachverteilerraum 10 ausgebildet sein kann. Ersichtlich kann der Nachverteilerraum 10 gemeinsam durch die zwei Formwerkzeughälftenteile 2.1, 2.2 ausgebildet und somit durch Wandungsabschnitte der zwei Formwerkzeughälftenteile 2.1, 2.2 begrenzt sein. Mithin kann das Formwerkzeughälftenteil 2 durch einen entsprechenden Nachverteilerraum 10 konstruktiv so konfiguriert sein, dass ein aus diesem ausströmendes Temperierfluid jedenfalls nicht vollständig unmittelbar aus dem Zwischenraum 5, sondern zunächst in den Nachverteilerraum 10 strömt, in welchem dieses sich räumlich verteilen und erst nach entsprechender Verteilung, insbesondere flächenmäßig, möglichst gleichmäßig verteilt aus der Formwerkzeughälfte 2 ausströmen kann.

Anhand von Fig. 4 ist ersichtlich, dass innerhalb des Nachverteilerraums 10 mehrere räumlich verteilt angeordnete oder ausgebildete Ausströmabschnitte 9 vorhanden sind. sodass auch ein möglichst gleichmäßiges Ausströmen von Temperierfluid aus dem Nachverteilerraum 10 gewährleistet werden kann.

Ein jeweiliger Ausströmabschnitt 9 kann in allen Fällen eine, z. B. flanschartige bzw. -förmige, Anschlussmöglichkeit zum Anschließen eines mit einer Temperierfluidversorgung (nicht gezeigt) verbundenen Leitungselements 8 (nicht gezeigt), wie z. B. eines Schlauchs, Rohrs, etc., aufweisen. Mithin können einem mehrere Ausströmabschnitte 9 aufweisenden Nachverteilerraum 10 gegebenenfalls mehrere Temperierfluidversorgungen zugeordnet sein, über welche sich, z. B. über eine, z. B. als Fluidverteilerblock 13 ausgebildete, Fluidverteilereinrichtung, abhängig oder unabhängig voneinander ein Temperierfluid aus dem Nachverteilerraum 10 ausströmen lässt. Eine entsprechende Anschlussmöglichkeit kann z. B. mit einem Gewinde versehen sein, auf welches sich ein entsprechendes Gegengewinde eines Leitungselements 8 aufschrauben lässt.

Anhand von Fig. 4 ist ferner ersichtlich, dass die den Nachverteilerraum 10 begrenzenden Wandungsabschnitte eines jeweiligen Formwerkzeughälftenteils 2.1, 2,.2 - hierunter sind insbesondere die den Nachverteilerraum 10 gegenüber dem Zwischenraum 5 abgrenzenden Wandungsabschnitte der Formwerkzeughälftenteile 2.1, 2.2 zu verstehen - zumindest abschnittsweise zinnenartig bzw. -förmig angeordnet oder ausgebildet sein. Durch eine entsprechende Zinnenstruktur, welche sich, wie Fig. 4 beispielhaft zeigt, durch unterschiedlich dimensionierte, d. h. insbesondere unterschiedlich hohe, Wandungsabschnitte in gleichmäßig oder ungleichmäßig abwechselnder Anordnung auszeichnet, kann ein, z. B. im Hinblick auf bestimmte Strömungseigenschaften des Temperierfluids, wie z. B. eine bestimmte Strömungsgeschwindigkeitsverteilung, gewünschtes Einströmen des Temperierfluids aus dem Zwischenraum 5 in den Nachverteilerraum 10 ermöglicht werden.

Anhand der Fig. 3 und 4 ist ferner ersichtlich, dass sich der Vorverteilerraum 7 und/oder der Nachverteilerraum 10 zumindest in wenigstens einer Raumrichtung des Formwerkzeugs 1, insbesondere in Breitenrichtung, wenigstens über 50%, insbesondere wenigstens über 55%, weiter insbesondere wenigstens über 60%, weiter insbesondere wenigstens über 65%, weiter insbesondere wenigstens über 70%, weiter insbesondere wenigstens über 75%, weiter insbesondere wenigstens über 80%, weiter insbesondere wenigstens über 85%, weiter insbesondere wenigstens über 90%, weiter insbesondere wenigstens über 95%, gegebenenfalls sogar über 100% der maximalen Abmessungen des oder der jeweiligen Formwerkzeughälftenteile 2.1, 2.2 erstrecken kann. Der Einfluss des Vorverteilerraums bzw. des Nachverteilerraums 10 auf die Strömungseigenschaften des durch den Zwischenraum 5 strömenden Temperierfluids kann sonach über die jeweilige räumliche Erstreckung des Vorverteilerraums 7 und/oder des Nachverteilerraums 10 gezielt gewählt werden.

Ein oder mehrere Einströmabschnitte 6 des Vorverteilerraums 7 respektive diesen zugeordnete Temperierfluidversorgungen können mit einem oder mehreren Ausströmabschnitten 9 des Nachverteilerraums 10 respektive diesen zugeordneten Temperierfluidversorgungen kommunizieren, sodass sich ein Temperierfluid kreislaufartig zwischen dem oder den Einströmabschnitt(en) 6, dem Zwischenraum 5 und dem oder den Ausströmabschnitt(en) 9 zirkulieren lässt. In einen entsprechenden Kreislauf kann gegebenenfalls wenigstens eine Wärmetauschereinrichtung (nicht gezeigt) geschaltet angeordnet sein, über welche sich eine Temperierung des Temperierfluids auf eine bestimmte Zieltemperatur oder einen gewünschten Zieltemperaturbereich realisieren lässt. Insbesondere anhand der Fig. 2 - 4 ist ersichtlich, dass das Formwerkzeug 1 eine mehrere zumindest abschnittsweise, gegebenenfalls vollständig, zwischen dem Vorverteilerraum 7 und dem Nachverteilerraum 10 angeordnete oder ausgebildete Strömungsbeeinflussungselemente 11.1 umfassende Strömungsbeeinflussungsstruktur 11 aufweist. aufweisen kann. Die Strömungsbeeinflussungsstruktur 11 kann sich sonach zwischen dem Vorverteilerraum 7 und dem Nachverteilerraum 10, mithin in dem Zwischenraum 5, erstrecken. Die Strömungsbeeinflussungsstruktur 11 respektive die diese bildenden Strömungsbeeinflussungselemente 11 sind in dem Zwischenraum 5 ausgebildet, um die Strömungseigenschaften des, insbesondere ausgehend von dem Vorverteilerraum 7 in Richtung des Nachverteilerraums 10, durch den Zwischenraum 5 strömenden Temperierfluids gezielt zu beeinflussen.

Die Strömungsbeeinflussungsstruktur 11 kann in gleichmäßiger oder ungleichmäßiger Anordnung mehrere Strömungsbeeinflussungselemente 11.1 gleicher oder ungleicher Geometrie umfassen. Mithin lassen sich die Strömungseigenschaften des den Zwischenraum 5 durchströmenden Temperierfluids insbesondere durch eine gezielt gewählte gleichmäßige oder ungleichmäßige Anordnung von Strömungsbeeinflussungselementen 11.1 gleicher oder ungleicher Geometrie beeinflussen. Die Strömungsbeeinflussungsstruktur 11 kann dabei ein oder mehrere Bereiche mit gleichmäßig angeordneten und/oder ausgerichteten Strömungsbeeinflussungselementen 11.1 gleicher oder ungleicher Geometrie und/oder ein oder mehrere Bereiche mit ungleichmäßig angeordneten und/oder ausgerichteten Strömungsbeeinflussungselementen 11.1 gleicher oder ungleicher Geometrie aufweisen.

In allen Ausführungsbeispielen können die den Zwischenraum 5 begrenzenden Wandungsabschnitte wenigstens eines Formwerkzeughälftenteils 2.1, 2.2 flächenmäßig wenigstens zu 50% insbesondere wenigstens zu 55%, weiter insbesondere zu wenigstens 60%, weiter insbesondere zu wenigstens 65%, weiter insbesondere zu wenigstens 70%, weiter insbesondere zu wenigstens 75%, weiter insbesondere zu wenigstens 80%, weiter insbesondere zu wenigstens 85%, weiter insbesondere zu wenigstens 90%, weiter insbesondere zu wenigstens 95%, mit entsprechenden Strömungsbeeinflussungselementen 11.1 bedeckt sein.

Die Fig. 2 - 4 deuten ebenso an, dass ein jeweiliges Strömungsbeeinflussungselement 11.1 eine, insbesondere sich in Richtung einer die Formwerkzeugkavität 4 begrenzende Kontur des entsprechenden Formwerkzeughälftenteils 2.1 ausgerichtete, säulenartige bzw. -förmige Grundform aufweisen kann.

Die Querschnittsgeometrie eines jeweiligen Strömungsbeeinflussungselements 11.1 kann - dies grundsätzlich unabhängig von seiner säulenartige bzw. -förmige Grundform - kann grundsätzlich im Hinblick auf eine gewünschte strömungstechnische Beeinflussung der Strömungseigenschaften des Temperierfluids an der jeweiligen Stelle, an welcher das jeweilige Strömungsbeeinflussungselement 11.1 in dem Zwischenraum 5 angeordnet ist, gewählt sein. Lediglich beispielhaft sei, wie in den Fig. 2 - 4 entsprechend beispielhaft gezeigt, deshalb auf runde bzw. rundliche oder eckige, ovale, ellipsoide Querschnittsgeometrien zu verweisen. Insbesondere zeigen die Fig. eine zitronenartig bzw. -förmig Querschnittsgeometrie.

Ein freies Ende eines jeweiligen Strömungsbeeinflussungselements 11.1 kann eine Abstützfläche für ein mit dem jeweiligen Formwerkzeughälftenteil 2.1 verbundenes Formwerkzeughälftenteil 2.2 bilden. Ein jeweiliges Strömungsbeeinflussungselement 11.1 kann sich sonach diese gegeneinander abstützend, den Zwischenraum 5 durchsetzend zwischen einem ersten Formwerkzeughälftenteil 2.1 und einem zweiten Formwerkzeughälftenteil 2.2 angeordnet oder ausgebildet sein. Derart kann ein jeweiliges Strömungsbeeinflussungselement 11.1 zusätzlich eine Abstütz- bzw. Tragfunktion ausüben, welche sich positiv auf die strukturellen Eigenschaften, d. h. insbesondere die Stabilität, der jeweiligen Formwerkzeughälfte 2 auswirkt.

Die Fig. zeigen ferner, dass die Formwerkzeughälftenteile 2.1, 2.2 (beschädigungs- bzw. zerstörungsfrei) lösbar miteinander verbindbar oder verbunden sein können. Die Verbindung der Formwerkzeughälftenteile 2.1, 2.2 kann sonach bedarfsweise gelöst werden, was Service- und/oder Reparaturarbeiten an der jeweiligen Formwerkzeughälfte 2 erheblich vereinfachen kann. Um auch bei einer lösbaren Verbindung jeweiliger Formwerkzeughälftenteile eine unerwünschte Leckage von Temperierfluid aus dem Zwischenraum zu verhindern, können ein oder mehrere Dichtelemente (nicht gezeigt) vorhanden sein, welche eine Abdichtung der jeweiligen Formwerkzeughälfte, insbesondere in der Fügeebene der jeweiligen Formwerkzeughälftenteile 2.1, 2.2, ermöglichen. In den Fig. 3, 4 sind zur Aufnahme entsprechender Dichtelemente rein beispielhaft Nuten bzw. Nutabschnitte 12 dargestellt.

Die lösbare Verbindung jeweiliger Formwerkzeughälftenteile 2.1, 2.2 kann durch form- und/oder kraftschlüssige Verbindungsarten realisiert sein. Die Formwerkzeughälftenteile 2.1, 2.2 können sonach z. B. durch eine Schraub- oder Nietverbindung lösbar aneinander befestigt sein. Für Schraub- oder Nietverbindungen können - wie die Fig. 2 - 4 beispielhaft zeigen - die Formwerkzeughälftenteile 2.1, 2.2 mit entsprechenden Aufnahmevorkehrungen (nicht gezeigt), wie z. B. Bohrungen 13, zur Aufnahme von Schraub- oder Nietelementen ausgebildet sein.

Für alle Ausführungsbeispiele gilt ferner, dass ein Formwerkzeughälftenteil 2.1, 2.2 z. B. eine schalen- oder wannenartige Grundform aufweisen kann. Die schalen- oder wannenartige Grundform begünstigt die Ausbildung eines entsprechenden Zwischenraums 5. Grundsätzlich denkbar sind jedoch auch andere Grundformen, wie z. B. plattenartige bzw. -förmige Grundformen. Wie weiter oben angedeutet, ist die Grundform der Formwerkzeughälften 2, 3 und damit jeweiliger Formwerkzeughälftenteile 2.1, 2.2 typischerweise im Hinblick auf das vermittels des Formwerkzeugs 1 konkret herzustellende Partikelschaumformteil gewählt.

Für alle Ausführungsbeispiele des Formwerkzeugs 1 gilt, dass dieses als Tauchkantenwerkzeug ausgebildet sein kann. Mithin kann eine Formwerkzeughälfte 2, 3 mit wenigstens einem Tauchkantenabschnitt (nicht gezeigt) ausgebildet sein, welcher in der Schließstellung zumindest abschnittsweise in die Formwerkzeugkavität 4 eintaucht. Derart kann gegebenenfalls eine Komprimierung des in die Formwerkzeugkavität 4 eingefüllten Partikelschaummaterials einhergehen.

Für alle Ausführungsbeispiele des Formwerkzeugs 1 gilt ferner, dass dieses mit einer durch ein oder mehrere Entlüftungselemente umfassenden Entlüftungsstruktur (nicht gezeigt) ausgebildet sein kann. Mithin kann wenigstens eine Formwerkzeughälfte 2, 3 mit, z. B. durch Öffnungen, Spalte, Vertiefungen, etc., gebildeten Entlüftungselementen versehen sein, welche, etwa im Rahmen eines Befüllens der Formwerkzeugkavität 4 mit Partikelschaummaterial, eine Entlüftung der Formwerkzeugkavität 4 ermöglichen. Entsprechende Entlüftungselemente können auch durch Tauchkantenspalte gebildet sein oder solche umfassen.

Sofern keine entsprechende Entlüftungsstruktur vorhanden ist, kann das Formwerkzeug 1 in der Schließstellung abgedichtet sein, sodass ein unerwünschter Austritt eines in die bzw. in der Formwerkzeugkavität 4 strömenden Fluids, wie z. B. einer Flüssigkeit, aus der Formwerkzeugkavität 4 nicht möglich ist.

Mit dem in den Fig. gezeigten Formwerkzeug 1 lässt sich ein Verfahren zur Herstellung eines Partikelschaumformteils implementieren. Das Verfahren umfasst typischerweise einen Schritt des Befüllens der Formwerkzeugkavität 4 mit einem Partikelschaummaterial, einen Schritt des Temperierens des Partikelschaummaterials zur Ausbildung eines Partikelschaumformteils und einen Schritt des Entnehmens des Partikelschaumformteils aus der Formwerkzeugkavität 4. Das Temperieren erfolgt insbesondere dadurch, dass der Zwischenraum 5 wenigstens einer mehrteilig ausgebildeten Formwerkzeughälfte 2, 3 mit wenigstens einem der Temperierung der wenigstens einen Formwerkzeughälfte 2, 3 dienenden Temperierfluid durchströmt wird.

## Patentansprüche

1. Formwerkzeug (1) zur Verarbeitung von expandierbarem oder expandiertem Partikelschaummaterial zur Herstellung eines Partikelschaumformteils, umfassend wenigstens zwei eine Formwerkzeugkavität (4) des Formwerkzeugs (1) definierende Formwerkzeughälften (2, 3), wobei wenigstens eine Formwerkzeughälfte (2, 3) wenigstens zwei unter Ausbildung eines von einem der Temperierung der wenigstens einen Formwerkzeughälfte (2, 3) dienenden Temperierfluid durchströmbaren Zwischenraums (5) miteinander verbindbare oder verbundene Formwerkzeughälftenteile (2.1, 2.2) umfasst,
**dadurch gekennzeichnet**, das
wenigstens ein Formwerkzeughälftenteil (2.1, 2.2) mit wenigstens einem Einströmabschnitt (6) für ein in den Zwischenraum (5) einströmendes Temperierfluid und wenigstens einem mit diesem kommunizierenden, durch Wandungsabschnitte des Formwerkzeughälftenteils (2.1, 2.2) begrenzten Vorverteilerraum (7) ausgebildet ist, wobei innerhalb des Vorverteilerraums (7) mehrere räumlich verteilt angeordnete oder ausgebildete Einströmabschnitte vorhanden sind, wobei die den Vorverteilerraum (7) begrenzenden Wandungsabschnitte zumindest abschnittsweise zinnenartig angeordnet oder ausgebildet sind, wobei durch eine entsprechende Zinnenstruktur ein im Hinblick auf bestimmte Strömungseigenschaften des Temperierfluids gewünschtes Einströmen des Temperierfluids aus dem Vorverteilerraum (7) in den Zwischenraum (5) ermöglicht wird; und
das wenigstens eine Formwerkzeughälftenteil (2.1, 2.2) mit wenigstens einem Ausströmabschnitt (9) für ein aus dem Zwischenraum (5) ausströmendes Temperierfluid und wenigstens einem mit diesem kommunizierenden, dem Vorverteilerraum gegenüber liegend angeordneten, durch Wandungsabschnitte des Formwerkzeughälftenteils (2.1, 2.2) begrenzten Nachverteilerraum (10) ausgebildet ist, wobei innerhalb des Nachverteilerraums (10) mehrere räumlich verteilt angeordnete oder ausgebildete Ausströmabschnitte (9) vorhanden sind, wobei die den Nachverteilerraum (10) begrenzenden Wandungsabschnitte zumindest abschnittsweise zinnenartig angeordnet oder ausgebildet sind, wobei durch eine entsprechende Zinnenstruktur ein im Hinblick auf bestimmte Strömungseigenschaften des Temperierfluids gewünschtes Einströmen des Temperierfluids aus dem Zwischenraum (5) in den Nachverteilerraum (10) ermöglicht wird;
ferner umfassend eine mehrere zumindest abschnittsweise zwischen dem bzw. einem Einströmabschnitt (6) und dem bzw. einem Ausströmabschnitt (9) angeordnete Strömungsbeeinflussungselemente (11.1) umfassende Strömungsbeeinflussungsstruktur (11), wobei die Querschnittsgeometrie eines jeweiligen Strömungsbeeinflussungselements (11.1) im Hinblick auf eine gewünschte strömungstechnische Beeinflussung der Strömungseigenschaften des Temperierfluids an der jeweiligen Stelle, an welcher das jeweilige Strömungsbeeinflussungselement (11.1) in dem Zwischenraum (5) angeordnet ist, gewählt ist.

2. Formwerkzeug nach Anspruch 1, **dadurch gekennzeichnet, dass** der Vorverteilerraum (7) sich zumindest im Bereich des Einströmabschnitts in wenigstens einer Raumrichtung, insbesondere in Breitenrichtung, wenigstens über 50% der maximalen Abmessungen der Formwerkzeughälfte (2, 3) oder wenigstens eines Formwerkzeughälftenteils (2.1, 2.2) erstreckt.

3. Formwerkzeug nach einem der vorhergehenden Ansprüche, **dadurch gekennzeichnet, dass** der Nachverteilerraum (10) sich zumindest im Bereich des Ausströmabschnitts (9) in wenigstens einer Raumrichtung, insbesondere in Breitenrichtung, wenigstens über 50% der maximalen Abmessungen der Formwerkzeughälfte (2, 3) oder wenigstens eines Formwerkzeughälftenteils (2.1, 2.2) erstreckt.

4. Formwerkzeug nach einem der vorhergehenden Ansprüche, **dadurch gekennzeichnet, dass** sich die Strömungsbeeinflussungsstruktur (11) zumindest abschnittsweise zwischen dem Vorverteilerraum (7) und dem Nachverteilerraum (10) erstreckt.

5. Formwerkzeug nach einem der vorhergehenden Ansprüche, **dadurch gekennzeichnet, dass** ein jeweiliges Strömungsbeeinflussungselement (11.1) eine, insbesondere sich in Richtung einer die Formwerkzeugkavität (4) begrenzenden Kontur des jeweiligen Formwerkzeughälftenteils (2.1, 2.2) ausgerichtete, säulenartige Grundform aufweist.

6. Formwerkzeug nach Anspruch 5, **dadurch gekennzeichnet, dass** ein jeweiliges Strömungsbeeinflussungselement (11.1) querschnittlich betrachtet eine runde oder ovale, insbesondere ellipsoide, Form aufweist.

7. Formwerkzeug nach einem der Ansprüche 4 bis 6, **dadurch gekennzeichnet, dass** ein freies Ende wenigstens eines Strömungsbeeinflussungselements (11.1) eine Abstützfläche für ein mit dem jeweiligen Formwerkzeughälftenteil (2.1, 2.2) verbindbares oder verbundenes Formwerkzeughälftenteil (2.2) bildet.

8. Formwerkzeug nach einem der vorhergehenden Ansprüche, **dadurch gekennzeichnet, dass** die die wenigstens eine Formwerkzeughälfte (2, 3) bildenden Formwerkzeughälftenteile (2.1, 2.2), insbesondere durch eine Schraubverbindung, lösbar aneinander befestigt sind.

9. Formwerkzeug nach einem der vorhergehenden Ansprüche, **dadurch gekennzeichnet, dass** es als Tauchkantenwerkzeug ausgebildet ist.

10. Formwerkzeug nach einem der vorhergehenden Ansprüche, **dadurch gekennzeichnet, dass** wenigstens eine Formwerkzeughälfte (2, 3) eine Entlüftungsstruktur zur Entlüftung der formgebenden Formwerkzeugkavität (4) umfasst.

## Claims

1. A molding tool (1) for processing expandable or expanded particle foam material for producing a particle foam molding, comprising at least two mold cavity (4) of the mold (1) defining mold halves (2, 3), wherein at least one mold half (2, 3) comprises at least two forming one of one of the tempering of the at least one mold half (2, 3) serving tempering fluid flow-through intermediate space (5) interconnectable or connected mold halves parts (2.1, 2.2),
**characterized in that** at least one mold halves part (2.1, 2.2) with at least one inflow portion (6) for an inflowing into the intermediate space (5) temperature control fluid and at least one communicating with it, bounded by wall portions of the mold halves part (2.1, 2.2) pre-distribution space (7) is formed,
wherein within the pre-distributor space (7) there are several spatially distributed or formed inflow portions, wherein the wall portions limiting the pre-distributor space (7) are arranged or formed at least in sections crenellated, wherein a desired inflow of the tempering fluid from the pre-distributor space (7) into the intermediate space (5) is made possible by a corresponding crenellation structure with regard to certain flow characteristics of the tempering fluid; and
that at least one mold halves part (2.1, 2.2) having at least one outflow portion (9) for an outflowing from the intermediate space (5) tempering fluid and at least one communicating with it, the pre-distributor space opposite arranged by wall portions of the mold halves part (2.1, 2.2) limited post-distributor space (10) is formed, wherein within the post-distributor space (10) several spatially arranged or formed outflow portions (9) are present, wherein the limiting the post-distributor space (10) wall portions are arranged or formed at least in a cinder-like manner, wherein by a corresponding pinnacle structure a desired inflow of the tempering fluid from the intermediate space (5) into the post-distributor space (10) is made possible with regard to certain flow characteristics of the tempering fluid;
further comprising a plurality of at least partially arranged between the or an inflow portion (6) and the or an outflow portion (9) flow-influencing elements (11.1) comprising flow-influencing structure (11), wherein the cross-sectional geometry of a respective flow-influencing element (11.1) is selected with regard to a desired flow-technical influence of the flow properties of the tempering fluid at the respective location where the respective flow-influencing element (11.1) is arranged in the intermediate space (5).

2. The molding tool according to claim 1, **characterized in that** the predistributor space (7) extends at least in the region of the inflow portion in at least one spatial direction, in particular in the width direction, at least over 50% of the maximum dimensions of the mold half (2, 3) or at least one mold half part (2.1, 2.2).

3. The molding tool according to one of the preceding claims, **characterized in that** the post-distributor space (10) extends at least in the region of the outflow portion (9) in at least one spatial direction, in particular in the width direction, at least over 50% of the maximum dimensions of the mold half (2, 3) or at least one mold half part (2.1, 2.2).

4. The molding tool according to any one of the preceding claims, **characterized in that** the flow-influencing structure (11) extends at least in sections between the pre-distributor space (7) and the post-distributor space (10).

5. The molding tool according to any one of the preceding claims, **characterized in that** a respective flow-influencing element (11.1) has an aligned, column-like basic shape, in particular in the direction of a contour of the respective mold halves part (2.1, 2.2) limiting the mold cavity (4).

6. The molding tool according to claim 5, **characterized in that** a respective flow-influencing element (11.1) cross-sectionally has a round or oval, in particular ellipsoidal, shape.

7. The molding tool according to any one of claims 4 to 6, **characterized in that** a free end of at least one flow-influencing element (11.1) forms a support surface for a mold halves part (2.2) that can be connected to the respective mold halves part (2.1, 2.2).

8. The molding tool according to any one of the preceding claims, **characterized in that** the forming tool halves parts (2.1, 2.2) forming at least one molding tool half (2, 3) are releasably fastened to each other, in particular by a screw connection.

9. The molding tool according to any one of the preceding claims, **characterized in that** it is formed as a plunge edge tool.

10. The molding tool according to any one of the preceding claims, **characterized in that** at least one mold half (2, 3) comprises a venting structure for venting the forming mold cavity (4).

## Revendications

1. Moule de moulage (1) pour le traitement d'un matériau expansible ou expansé en mousse particulaire pour la fabrication d'une pièce moulée en mousse particulaire, comprenant au moins deux moitiés d'outil de moulage (2, 3) définissant une cavité d'outil de moulage (4) de l'outil de moulage (1), au moins une moitié de moule (2, 3) comprenant au moins deux parties de moule (2.1, 2.2) pouvant être reliées ou reliées entre elles en formant un espace intermédiaire (5) pouvant être traversé par un fluide de régulation de température servant à la régulation de température de ladite au moins une moitié de moule (2, 3),
**caractérisé en ce qu'**au moins une moitié d'outil de formage (2.1, 2.2) est conçue avec au moins une section d'admission (6) pour un fluide de régulation de température entrant dans l'espace intermédiaire (5) et au moins un espace de distribution préalable (7) communiquant avec celle-ci et délimité par des sections de paroi de la moitié d'outil de formage (2.1, 2.2),
à l'intérieur de l'espace de pré-distribution (7) se trouvent plusieurs sections d'entrée d'écoulement réparties ou disposées dans l'espace, les sections de paroi délimitant l'espace de distribution préalable (7) étant disposées ou conçues au moins par sections en forme de créneaux, une structure en créneaux appropriée permettant l'écoulement souhaité du fluide de régulation de température de l'espace de distribution préalable (7) vers l'espace intermédiaire (5) en tenant compte des propriétés d'écoulement du fluide de régulation de température ; et
la au moins une moitié de moule (2.1, 2.2) est conçue avec au moins une section d'écoulement (9) pour un fluide de régulation de température s'écoulant de l'espace intermédiaire (5) et au moins un espace de redistribution (10) communiquant avec celui-ci, disposé en face de l'espace de pré-distribution et par des sections de paroi de la moitié de l'outil de formage (2.1, 2.2), plusieurs sections d'écoulement (9) réparties ou disposées dans l'espace étant présentes à l'intérieur de l'espace de redistribution (10), les sections de paroi délimitant l'espace de redistribution (10) étant disposées ou conçues au moins par sections en forme de créneaux, une structure de créneaux appropriée permettant l'écoulement souhaité du fluide de régulation de température de l'espace intermédiaire (5) vers l'espace de redistribution (10) en tenant compte des propriétés d'écoulement spécifiques du fluide de régulation de température ;
comprenant en outre une structure d'influence de l'écoulement (11) comprenant plusieurs éléments d'influence de l'écoulement (11.1) disposés au moins par sections entre la section d'entrée (6) et la section de sortie (9), la géométrie de la section transversale d'un élément respectif (11.1) d'influence de l'écoulement étant choisie en vue d'une influence souhaitée, sur le plan de la technique des fluides, des propriétés d'écoulement du fluide de régulation de température à l'endroit respectif où l'élément respectif (11.1) d'influence de l'écoulement est disposé dans l'espace intermédiaire (5).

2. Moule de moulage selon la revendication 1, **caractérisé en ce que** la chambre de distribution (7) s'étend au moins dans la zone de la section d'entrée d'écoulement dans au moins une direction spatiale, en particulier dans le sens de la largeur, sur au moins 50 % des dimensions maximales de la moitié du moule (2, 3) ou d'au moins une partie de la moitié du moule (2.1, 2.2).

3. Moule de moulage selon l'une des revendications précédentes, **caractérisé en ce que** l'espace de distribution secondaire (10) s'étend, au moins dans la zone de la section d'écoulement (9), dans au moins une direction spatiale, en particulier dans le sens de la largeur, au moins 50 % des dimensions maximales de la moitié de l'outil de formage (2, 3) ou d'au moins une partie de la moitié de l'outil de formage (2.1, 2.2).

4. Moule de moulage selon l'une des revendications précédentes, **caractérisé en ce que** la structure d'influence de l'écoulement (11) s'étend au moins par sections entre la chambre de pré-distribution (7) et la chambre de post-distribution (10).

5. Moule de formage selon l'une des revendications précédentes, **caractérisé en ce qu'**un élément respectif (11.1) d'influence sur l'écoulement présente une forme de base en colonne, orientée en particulier en direction d'un contour de la partie respective (2.1, 2.2) de l'outil de formage délimitant la cavité (4) de l'outil de formage.

6. Moule de formage selon la revendication 5, **caractérisé en ce qu'**un élément respectif d'influence de l'écoulement (11.1) présente, vu en coupe transversale, une forme ronde ou ovale, en particulier ellipsoïdale.

7. Moule de formage selon l'une des revendications 4 à 6, **caractérisé en ce qu'**une extrémité libre d'au moins un élément de contrôle de l'écoulement (11.1) forme une surface d'appui pour une moitié d'outil de formage (2.2) pouvant être reliée ou reliée à la moitié d'outil de formage respective (2.1, 2.2).

8. Moule de formage selon l'une des revendications précédentes, **caractérisé en ce que** les moitiés d'outil de formage (2.1, 2.2) formant au moins une moitié d'outil de formage (2, 3) sont fixées l'une à l'autre de manière amovible, en particulier par un assemblage vissé.

9. Moule de formage selon l'une des revendications précédentes, **caractérisé en ce qu'**il est conçu comme un outil à arêtes plongeantes.

10. Moule de formage selon l'une des revendications précédentes, **caractérisé en ce qu'**au moins une moitié d'outil de formage (2, 3) comprend une structure de ventilation pour ventiler la cavité de l'outil de formage (4) qui donne la forme.
